# EUROPÄISCHE PATENTSCHRIFT

(11) **EP 1 557 301 B1**
(45) Veröffentlichungstag und Bekanntmachung des Hinweises auf die Patenterteilung: **15.06.2011**
(21) Anmeldenummer: 04030226.7
(22) Anmeldetag: 21.12.2004
(51) Int. Cl.: B60G 7/00, B60G 9/00

(54) **Vierpunktlenker zur Anbindung einer Starrachse an den Rahmen eines Nutzfahrzeuges**
Four-point-arm for connecting a rigid axle to the frame of a utility vehicle
Bras à quatre points pour connecter un essieu rigide au chassis d'un véhicule utilitaire

(30) Priorität: 22.01.2004 DE 102004003185
(43) Veröffentlichungstag der Anmeldung: 27.07.2005
(73) Patentinhaber: MAN Truck & Bus AG, 80995 München (DE)
(72) Erfinder: Breitling, Ulrich, Dr., 81245 München (DE); Hintereder, Jürgen, Dipl.-Ing., 85586 Poing (DE); Schaller, Karl Viktor, Dr., 82194 Gröbenzell (DE)

(56) Entgegenhaltungen:
- EP-A- 0 776 275
- EP-A- 1 231 083
- EP-A- 1 318 035
- EP-A- 1 336 514
- DE-A1- 4 132 779
- DE-A1- 10 007 193

## Beschreibung

Die Erfindung betrifft einen Vierpunktlenker zur Anbindung einer Starrachse an den Rahmen eines Nutzfahrzeugs nach dem Oberbegriff des Patentanspruches 1.

Ein derartiger aus EP 1 336 514 A2 bekannter Vierpunktlenker besitzt einen im Grundriss etwa X-förmigen Hohlkörper, der aus vorgeformten und zusammengeschweißten hochfesten Blechteilen besteht. An den Armenden des Hohlkörpers sind Lageraugen, vorzugsweise durch Schweißen befestigt. Da die vorgeformten Blechteile, welche den Hohlkörper des Vierpunktlenkers bilden, unterschiedlich geformt sind, werden den jeweiligen Blechteilen zugeordnete unterschiedliche Formgebungswerkzeuge benötigt.

Die Dokumente EP0776275, DE10007193 und DE4132779 offenbaren weitere relevante Lenker in verschiedenen Formen, die als Hohlkörper aus vorgeformten und zusammengeschweißten Blechteilen gebaut sind.

Aufgabe der Erfindung ist es, einen Vierpunktlenker der eingangs genannten Art zu schaffen, bei welchem der Herstellungsaufwand reduziert ist und die Schweißnähte mit einfacher Geometrie in hoher Qualität herstellbarr sind und vorzugsweise in Bereichen mit niedriger Beanspruchung liegen.

Diese Aufgabe wird erfindungsgemäß durch das Kennzeichen des Patentanspruches 1 gelöst.

Bei der Erfindung kommen zwei identisch gleiche Halbschalen, welche als gepresste, Blechteile aus hochfestem Stahl ausgebildet sind, zum Einsatz. Die beiden identischen Halbschalen werden in einer mittleren Symmetrieebene zu einem Hohlkörper zusammengeschweißt. Die vorgeformten Blechteile, welche die gepressten Halbschalen bilden, können somit mit den gleichen Verformungswerkzeugen, beispielsweise Tiefziehwerkzeugen, hergestellt werden. Hieraus resultieren eine verbesserte Prozesssicherheit mit geringeren Eigenschaftstoleranzen und Qualitätsverbesserungen bei Gewichts- und Kostensenkung. Außerdem lässt sich eine einfache und kostengünstige Variantendarstellung mit unterschiedlicher Steifigkeit durch Einsatz von Blechen mit unterschiedlicher Dicke bei Verwendung der gleichen Formgebungswerkzeuge von entweder Außen- oder Innenteil erreichen. Unterschiedliche Varianten für beispielsweise Vor- oder Nachlaufachse können somit mit reduziertem Mehraufwand bei den Formgebungswerkzeugen hergestellt werden.

Der Pressvorgang erfolgt vorzugsweise im unvergüteten Zustand. Die Halbschalen werden daher erst nach dem Umformungsvorgang vergütet. Zur Erleichterung des Pressvorganges können die Halbschalen mit maximalen Ausrundungsradien gestaltet sein. Die Deckflächen können eben oder mindestens leicht bombiert sein, wobei die Gesamtform der Schalen ausgehend von einer Optimalstruktur an Fertigungsbedingungen angepasst sein kann. Die Verschweißung der Halbschalen in der Mittel- bzw. Symmetrieebene des Hohlkörpers erfolgt vorzugsweise mit einer I- oder V-Naht. Die Verschweißung der Halbschalen kann im vergüteten oder unvergüteten Zustand mit dem Ziel höchstmöglicher Genauigkeit und Betriebsfestigkeit im Schweißnahtbereich erfolgen. Hierbei kann WIG (Wolfram-Inertgas)-Schweißen oder MAG (Metall-Aktivgas)-Schweißen oder Laserstrahlschweißen zum Einsatz kommen.

Die Lageraugen bestehen vorzugsweise aus Stahlmassivteilen, insbesondere geschmiedeten Massivteilen. Sie können paarweise oder insgesamt gleich ausgebildet sein. Im Bereich der Verbindungsstellen mit dem Hohlkörper sind die Lageraugen an die Geometrie der Armenden des Hohlkörpers angepasst. Dies kann mit Hilfe von Anschweißkonturen, durch Bemessung der Wandstärke oder durch Eintiefungen erreicht werden. Vorzugsweise erfolgt die Anpassung in der Weise, dass die Verschweißung der Lageraugen mit den Armenden des Hohlkörpers mit annähernder oder genauer kreisförmiger Geometrie in einer I- oder V-Schweißnaht und bevorzugt in einer Reibschweißung erfolgen kann.

Die Gesamtgeometrie des Hohlkörpers ist im Hinblick auf die geforderte Steifigkeit, maximale Lebensdauer, Betriebsbeanspruchung und minimiertes Gewicht optimiert.

Der Vierpunktlenker kann zur Hinterachsführung, Vorderachsführung und zur Vor- und Nachlaufachsführung verwendet werden. Der Vierpunktlenker erfüllt die Funktionen der Längskraft- und Seitenkraftübertragung sowie eine Stabilisatorfunktion. Der Vierpunktlenker kann während des Fahrbetriebs eine aus mehreren fahrdynamischen Kräften zusammengesetzte Beanspruchung, welche auch Torsion enthalten kann, aufnehmen.

Anhand der Figuren wird an einem Ausführungsbeispiel die Erfindung noch näher erläutert.

Es zeigt
- Fig. 1: in perspektivischer Darstellung von schräg oben gesehen ein Ausführungsbeispiel der Erfindung;

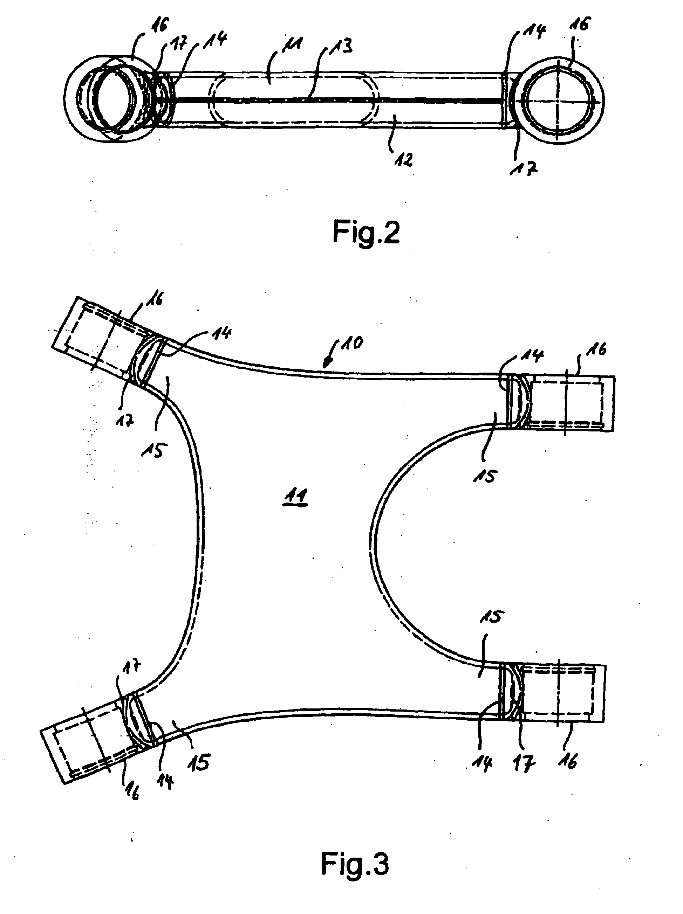

- Fig. 2: eine Seitenansicht des in Fig. 1 dargestellten Ausführungsbeispiels; und
- Fig. 3: eine Draufsicht auf das Ausführungsbeispiel.

Der in den Figuren dargestellte Vierpunktlenker besteht aus einem im Grundriss etwa X-oder H-förmigen Hohlkörper 10. Der Hohlkörper 10 wird von zwei Halbschalen 11 und 12 gebildet. Die Halbschalen 11, 12 bestehen aus identisch gleichen umgeformten Blechteilen aus hochfestem Stahl. Vorzugsweise erfolgt die Umformung der Blechteile durch Pressen. Die Umformung der Blechteile zu den Halbschalen 11, 12 erfolgt im unvergüteten Zustand des Blechmaterials.

Die beiden Halbschalen 11, 12 sind in Schweißnähte 13 in einer mittleren Symmetrieebene des Hohlkörpers 10 zusammengeschweißt. Hierzu sind vier Schweißnähte 13 vorgesehen. Die Schweißnähte können I- oder V-Nähte sein.

Die Deckflächen der Halbschalen 11, 12 sind beim dargestellten Ausführungsbeispiel eben ausgebildet, sie können jedoch auch leicht bombiert sein. Zur Erleichterung des Pressvorganges können die Halbschalen 11, 12 mit maximalen Ausrundungsradien gestaltet sein.

An vier Armenden 15 des Hohlkörpers 10 sind Lageraugen 16 durch Schweißnähte 14 befestigt. Die Schweißnähte 14 können eine annähernd oder genaue kreisförmige Gestalt haben. Hierzu können die Lageraugen 16 im Bereich der Schweißnähte 14 an die Geometrie der Armenden 15 angepasst sein. Beim dargestellten Ausführungsbeispiel sind hierzu Anschweißkonturen 17 an den Lageraugen 16 vorgesehen. Die Lageraugen 16 sind vorzugsweise als Massivteile aus Stahl ausgebildet und können geschmiedet sein.

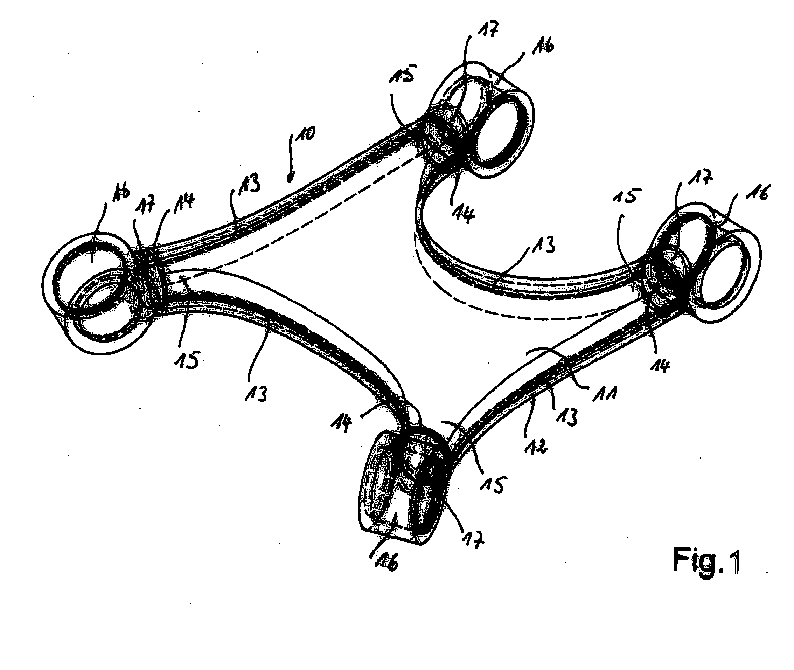

Wie insbesondere aus Fig. 1 zu ersehen ist, bildet der aus den beiden Halbschalen 11, 12 bestehende Hohlkörper 10 ein Flächentragwerk mit vier Gelenkarmen, wobei an den Enden der Gelenkarme 15 die Lageraugen 16 zur Befestigung an der Starrachse und am Fahrzeugrahmen vorgesehen sind. Die Lageraugen, welche zur Befestigung an der Achse dienen, sind koaxial angeordnet (rechte Lageraugen in Fig. 1). Die Achsen der Lageraugen, welche am Fahrzeugrahmen befestigt werden, verlaufen schräg zueinander (linke Lageraugen in Fig. 1).

### Bezugszeichenliste

- 10: Hohlkörper
- 11: erste Halbschale
- 12: zweite Halbschale
- 13: Schweißnähte
- 14: Schweißnähte
- 15: Armenden
- 16: Lageraugen
- 17: Anschweißkonturen

## Patentansprüche

1. Vierpunktlenker zur Anbindung einer Starrachse an den Rahmen eines Nutzfahrzeugs mit einem im Grundriss etwa X- oder H-förmigen Hohlkörper, der aus vorgeformten und zusammengeschweißten hochfesten Blechteilen gebildet ist, und mit an den Armenden des Hohlkörpers befestigten Lageraugen, **dadurch gekennzeichnet, dass** die Blechteile aus zwei identisch gleichen gepressten Halbschalen (11, 12) bestehen, die in einer mittleren Symmetrieebene des Hohlkörpers (10) zusammengeschweißt sind.

2. Vierpunktlenker nach Anspruch 1, **dadurch gekennzeichnet, dass** die Blechteile in unvergüteten Zustand zu den Halbschalen (11, 12) umgeformt sind.

3. Vierpunktlenker nach Anspruch 1 oder 2, **dadurch gekennzeichnet, dass** die Deckflächen der Halbschalen (11, 12) leicht bombiert sein können.

4. Vierpunktlenker nach einem der Ansprüche 1 bis 3, **dadurch gekennzeichnet, dass** die Lageraugen (16) aus Massivteilen, insbesondere geschmiedeten Stahl bestehen.

5. Vierpunktlenker nach einem der Ansprüche 1 bis 4, **dadurch gekennzeichnet, dass** die Lageraugen (16) Anschweißkonturen (17) für annähernd oder genau kreisförmige Schweißnähte (14) mit den Armenden (15) des Hohlkörpers (10) aufweisen.

6. Vierpunktlenker nach Anspruch 1, **dadurch gekennzeichnet, dass** die beiden Halbschalen (11, 12) mit einer I-oder V-Naht verschweißt sind.

7. Vierpunktlenker nach einem der Ansprüche 1 bis 5, **dadurch gekennzeichnet, dass** die Lageraugen (16) durch Reibschweißung an den Armenden (15) des Hohlkörpers (10) befestigt sind.

## Claims

1. Four-point arm (four-point link) for connecting a rigid axle to the frame of a utility vehicle with a hollow body shaped on the horizontal plane roughly as an X or an H, which body is formed from pre-formed and welded high-strength sheet-metal parts, and with bearing eyes fastened at the arm ends of the hollow body, **characterised in that** the sheet-metal parts consist of two identical, pressed half shells (11, 12), which are welded together in a central symmetrical plane of the hollow body (10).

2. Four-point arm in accordance with claim 1, **characterised in that** the sheet-metal parts are shaped into half shells (11, 12) in untempered condition.

3. Four-point arm in accordance with claims 1 or 2, **characterised in that** the cover areas of the half shells (11, 12) may be slightly curved.

4. Four-point arm in accordance with one of claims 1 to 3, **characterised in that** the bearing eyes (16) consist of solid parts, particularly made of forged steel.

5. Four-point arm in accordance with one of claims 1 to 4, **characterised in that** the bearing eyes (16) feature weld-on contours (17) for approximately or precisely circular welding seams (14) with the arm ends (15) of the hollow body (10).

6. Four-point arm in accordance with claim 1, **characterised in that** both the half shells (11, 12) are welded with an I or a V seam.

7. Four-point arm in accordance with one of claims 1 to 5, **characterised in that** the bearing eyes (16) are fastened on the arm ends (15) of the hollow body (10) by friction welding.

## Revendications

1. Bras de guidage à quatre points pour relier un essieu rigide au cadre d'un véhicule industriel avec un élément creux dans la projection horizontale à peu près en X ou en en H, qui est formé en pièces de tôle très résistantes prémoulées et soudées ensemble, et avec des oeillets de palier fixés aux extrémités des bras de l'élément creux, **caractérisé en ce que** les pièces en tôle se composent de deux demi-coquilles (11, 12) embouties identiques qui sont soudées entre elles dans un plan symétrique central de l'élément creux (10).

2. Bras de guidage à quatre points selon la revendication 1, **caractérisé en ce que** les pièces en tôle sont reformées en demi-coquilles (11, 12) à l'état non trempé et revenu.

3. Bras de guidage à quatre points selon la revendication 1 ou 2, **caractérisé en ce que** les surfaces de recouvrement des demi-coquilles (11, 12) peuvent être légèrement bombées.

4. Bras de guidage à quatre points selon l'une des revendications 1 à 3, **caractérisé en ce que** les oeillets de palier (16) se composent de pièces massives, en particulier en acier forgé.

5. Bras de guidage à quatre points selon l'une des revendications 1 à 4, **caractérisé en ce que** les oeillets de palier (16) présentent des contours à souder (17) pour les cordons de soudure (14) approximativement ou exactement circulaires avec les extrémités de bras (15) de l'élément creux.

6. Bras de guidage à quatre points selon la revendication 1, **caractérisé en ce que** les deux demi-coquilles (11, 12) sont soudées à l'aide d'un cordon en forme de I ou de V.

7. Bras de guidage à quatre points selon l'une des revendications 1 à 5, **caractérisé en ce que** les oeillets de palier (16) sont fixés aux extrémités de bras (15) de l'élément creux (10) au moyen d'un soudage par friction.
